Europäisches Patentamt

European Patent Office

Office européen des brevets

(19)

(11) **EP 1 103 158 B1**

(12) **FASCICULE DE BREVET EUROPEEN**

(45) Date de publication et mention
de la délivrance du brevet:
**29.09.2004 Bulletin 2004/40**

(21) Numéro de dépôt: **98935108.5**

(22) Date de dépôt: **06.07.1998**

(51) Int Cl.7: **H04Q 11/04**, H04L 12/56

(86) Numéro de dépôt international:
**PCT/FR1998/001444**

(87) Numéro de publication internationale:
**WO 2000/002413 (13.01.2000 Gazette 2000/02)**

(54) **PROCEDE D'ALLOCATION DYNAMIQUE DE DEBITS POUR UN RESEAU DE COMMUNICATION NOTAMMENT UN RESEAU DU TYPE A HAUTS DEBITS**

DINAMISCHES BANDBREITENZUORDNUNGSVERFAHREN FÜR EIN KOMMUNIKATIONSNETZWERK INSBESONDERE EIN HOCHGESCHWINDIGKEITSNETZWERK

METHOD FOR DYNAMIC RATE ALLOCATION IN A COMMUNICATION NETWORK, IN PARTICULAR A HIGH RATE NETWORK

(84) Etats contractants désignés:
**DE FR SE**

(43) Date de publication de la demande:
**30.05.2001 Bulletin 2001/22**

(73) Titulaire: **FRANCE TELECOM SA**
**75015 Paris (FR)**

(72) Inventeur: **REMAEL, François-Arnaud**
**F-22300 Lannion (FR)**

(74) Mandataire: **Maillet, Alain**
**Cabinet le Guen & Maillet,**
**5, Place Newquay,**
**B.P. 70250**
**35802 Dinard Cedex (FR)**

(56) Documents cités:
- **KALAMPOUKAS L ET AL: "AN EFFICIENT RATE ALLOCATION ALGORITHM FOR ATM NETWORKS PROVIDING MAX-MIN FAIRNESS" HIGH PERFORMANCE NETWORKING 6, IFIP 6TH. INTERNATIONAL CONFERENCE ON HIGH PERFORMANCE NETWORKING (HPN). PALMA DE MALLORCA, SEPT. 13 - 15, 1995, no. CONF. 6, 11 septembre 1995, pages 143-154, XP000624333 PUIGJANER R (ED )**
- **ROCHE C ET AL: "THE CONVERGING FLOWS PROBLEM: AN ANALYTICAL STUDY" PROCEEDINGS OF INFOCOM '95 - CONFERENCE ON COMPUTER COMMUNICATIONS, FOURTEENTH ANNUAL JOINT CONFERENCE OF THE IEEE COMPUTER AND COMMUNICATIONS SOCIETIES, BOSTON APR. 2 - 6, 1995, vol. 3, 2 avril 1995, pages 32-39, XP000580560 INSTITUTE OF ELECTRICAL AND ELECTRONICS ENGINEERS**
- **BOLLA R ET AL: "A DISTRIBUTED ROUTING AND ACCESS CONTROL SCHEME FOR ATM NETWORKS" SERVING HUMANITY THROUGH COMMUNICATIONS. SUPERCOMM/ICC, NEW ORLEANS, MAY 1 - 5, 1994, vol. VOL. 1, no. -, 1 mai 1994, pages 44-50, XP000438881 INSTITUTE OF ELECTRICAL AND ELECTRONICS ENGINEERS**

**Description**

La présente invention concerne un procédé d'allocation dynamique de débits pour un réseau de communication, notamment un réseau du type à hauts débits tel qu'un réseau ATM (Asynchronous Transfer Mode).

Les réseaux ATM ont été conçus pour pouvoir supporter des flux de données multimédia, tels que des données, des sons, des images et de la vidéo. La technologie ATM permet à un même support de transmettre des flux présentant des débits et des demandes de performance différents. Pour pouvoir présenter de telles caractéristiques, les réseaux ATM sont prévus pour pouvoir gérer les ressources et garantir une qualité de service.

Avant d'être établie, une connexion doit en faire la demande au réseau en précisant les caractéristiques souhaitées, et notamment le débit qu'elle entend réserver et la qualité de service désirée. Au besoin, elle précise, dans sa requête, le débit minimum que le réseau doit lui garantir. Si le réseau juge qu'il a les ressources suffisantes pour satisfaire la demande, alors il établit la connexion mais il garantit également le débit et la qualité de service demandés.

Différentes classes de service ont été définies qui, selon la nature des sources de données et des demandes en performance et en qualité souhaitées par les connexions correspondantes, définissent à leur tour un protocole de contrôle des trafics sur ces connexions. Les classes généralement considérées sont les suivantes : la classe dite CBR (Constant Bit Rate), la classe qui est dite VBR (Variable Bit Rate), la classe dite ABR (Available Bit Rate) et une classe voisine de la classe ABR, la classe dite ABT (ATM Block Transfer).

Pour schématiser, on peut dire que dans la classe CBR, une qualité de service de haut niveau est spécifiée alors qu'aucune qualité de service en terme de temps de transfert ou de gigue n'est explicitement spécifiée dans la classe ABR. Dans la classe VBR, un certain nombre de paramètres de contrôle est défini au moment de la connexion, ces paramètres une fois définis servant au réseau pour garantir une qualité de service.

Les mécanismes qui sont généralement mis en oeuvre pour les classes de service dite ABR et ABT, seules considérées ici, sont les suivants. Pour chacune des connexions actives, de manière périodique, une cellule spécialisée, dite par la suite cellule de gestion de ressources, va parcourir l'ensemble du trajet suivi par les cellules usager de cette connexion. A la réception de cette cellule sur un noeud du réseau, un protocole est mis en oeuvre pour vérifier que le débit alloué jusqu'ici à la connexion n'excède pas une valeur déterminée en fonction des autres connexions du moment. Si tel est le cas, ce noeud va allouer à la connexion un nouveau débit dont la valeur sera placée dans la cellule de gestion de ressources. Arrivée à une extrémité du trajet suivi par les cellules usager, la cellule de gestion de ressources est retournée vers la source de la connexion concernée avec la plus petite valeur de débit autorisée le long du parcours. La source devra alors adapter son débit à cette nouvelle valeur.

Un procédé d'allocation est prévu pour être mis en oeuvre aux noeuds d'un réseau. Il permet d'allouer, à chacune des sources dont les connexions convergent sur un noeud du réseau et suite à une requête de débit formulée par ladite source, un débit de cellules de manière à partager la bande maxima offerte par le lien de sortie dudit noeud.

Une description des mécanismes mis en oeuvre pour le contrôle du trafic dans la classe ABR est par exemple faite par F.BONOMI et K.W.FENDICK dans un article intitulé "The rate-based flow control framework for the Available Bit Rate Atm service" paru dans IEEE Network de Mars/Avril 1995.

Les procédés d'allocation de débit connus sont généralement mis en oeuvre pour des connexions supportant des données et font utilisation dans les noeuds de files du type FIFO, ce qui ne peut être envisagé pour la transmission de vidéo du fait de la spécificité de celle-ci en ce qui concerne les débits qui sont nécessairement élevés, les temps de retard de transmission qui ne peuvent être trop importants, etc.

Le document KALAMPOUKAS L ET AL: 'AN EFFICIENT RATE ALLOCATION ALGORITHM FOR ATM NETWORKS PROVIDING MAX-MIN FAIRNESS' HIGH PERFORMANCE NETWORKING 6, IFIP 6TH. INTERNATIONAL CONFERENCE ON HIGH PERFORMANCE NETWORKING (HPN). PALMA DE MALLORCA, SEPT. 13-15, 1995, no. CONF. 6, 11 septembre 1995, pages 143-154, XP000624333 PUIGJANER R (ED ) décrit un processus itératif d'allocation de bande passante permettant d'ajuster en permanence, pour chaque connexion, la bande ou le débit requis en fonction de la bande disponible. Cependant le fait qu'une connexion satisfaite peut constituer un gaspillage de débit (si elle est satisfaite, une partie de la bande attribuée n'est pas utilsée) n'est pas pris en compte.

Le but de la présente invention est donc de proposer un procédé d'allocation de débit permettant un partage équitable de la bande passante utilisée par différentes sources temps réel, notamment des sources vidéo.

A cet effet, un procédé selon l'invention est caractérisé en ce qu'il consiste, lors de cycles successifs, à :

a) au début de chaque cycle, affecter à chacune desdites connexions un débit, et

b) pendant le cycle, à allouer, d'une part, à chaque connexion dont le débit requis est supérieur au débit qui lui a été affecté, le débit qui lui a été affecté, ladite connexion étant alors comptabilisée et marquée en tant que connexion écrêtée, et, d'autre part, à chaque connexion dont le débit requis est inférieur au débit qui lui a été affecté, soit le débit déjà alloué au cycle précédent si à ce cycle précédent ladite connexion n'avait pas été marquée en tant que connexion écrêtée, soit le débit requis si au cycle précédent ladite connexion avait été marquée en tant que connexion écrêtée, la différence entre la valeur du débit affecté et la valeur du débit alloué étant alors comptabilisée en tant que valeur de débit non-alloué,

c) et, à la fin dudit cycle, calculer une nouvelle valeur de débit à affecter au cycle suivant à chacune desdites connexions sur la base de la valeur comptabilisée de débit non-alloué et le nombre de connexions écrêtées.

Selon une autre caractéristique de l'invention, il consiste à affecter à chacune desdites sources, lors d'un cycle initial, un débit correspondant au partage équitable entre toutes les sources de la bande maxima offerte par le lien de sortie dudit noeud.

Selon une autre caractéristique de l'invention, il consiste à calculer la nouvelle valeur de débit à affecter au cycle suivant à chacune des connexions écrêtées en partageant équitablement le débit non-alloué entre lesdites connexions écrêtées.

Selon une autre caractéristique de l'invention, il consiste à calculer la nouvelle valeur de débit à affecter au cycle suivant à chacune desdites connexions en partageant équitablement entre lesdites connexions écrêtées ledit débit non-alloué auquel on ôte la valeur de débit affecté en excès.

Selon une autre caractéristique de l'invention, il est prévu pour que la période de chaque cycle soit supérieure à la période de renégociation mise en oeuvre par les équipements dudit réseau.

Selon une autre caractéristique de l'invention, il est prévu pour que la période de chaque cycle soit supérieure à la période de renégociation mise en oeuvre par les équipements dudit réseau augmentée de la durée maxima des temps respectivement mis par des cellules de gestion de ressources desdites connexions pour effectuer le trajet complet de la source considérée à l'autre extrémité du réseau et revenir à ladite source.

Selon une autre caractéristique de l'invention, il est prévu pour compter les requêtes émanant de chacune des sources, ledit procédé n'examinant que les requêtes qui ont un même numéro d'ordre.

Selon une autre caractéristique de l'invention, il est prévu pour marquer une connexion après réception de la requête de la source correspondante, ladite marque étant annulée au début de chaque cycle, et ledit procédé n'examinant que les requêtes des sources dont les connexions sont déjà marquées.

Selon une autre caractéristique de l'invention, il consiste à pondérer les débits respectivement affectés aux sources. Chaque facteur de pondération dépend avantageusement du débit minimum garanti demandé par la source correspondante. Il est par exemple égal au débit minimum garanti demandé par ladite source divisé par la somme totale des débits minimum garantis respectivement demandés par toutes les sources. Le débit qui est affecté à une source peut alors être égal à une valeur de débit commune à toutes les sources que multiplie ledit facteur de pondération.

Selon une autre caractéristique de l'invention, à la réception de la requête d'une source dont la connexion n'avait pas été marquée au cycle précédent en tant que connexion écrêtée, et lorsque le débit maintenant requis est supérieur au débit qui avait été alloué au cycle précédent, il consiste à interrompre le cycle en cours et à recommencer un nouveau cycle à partir de cette requête, le débit affecté à chaque source étant le débit le plus élevé entre le débit courant de la connexion concernée et la valeur de débit équitablement répartie entre toutes les sources.

Selon une autre caractéristique de l'invention, il consiste à conserver dans le contexte de chaque connexion un numéro caractérisant le cycle.

Les caractéristiques de l'invention mentionnées ci-dessus, ainsi que d'autres, apparaîtront plus clairement à la lecture de la description suivante d'un exemple de réalisation faite en relation avec le dessin joint qui illustre le procédé selon l'invention à partir d'un exemple arbitraire.

Le procédé selon l'invention est implanté dans chaque noeud d'un réseau. Là, pour chaque communication active qui converge sur le noeud considéré, est tenu un registre Reg dans lequel est stockée la valeur de débit qui est allouée à cette communication. A des temps espacés d'une période T, la source de chaque communication émet une cellule de gestion de ressources RM sur le trajet de la communication. Au départ, cette cellule RM porte la valeur de débit requis par la source. A chaque noeud, sont comparées la valeur portée par la cellule de gestion RM et celle qui est stockée dans le registre Reg du noeud. Si la valeur de débit stockée dans le registre Reg est inférieure à la valeur de débit portée par la cellule de gestion RM, alors cette dernière est modifiée en prenant la valeur stockée dans le registre Reg. Par contre, si elle est égale ou supérieure, alors la valeur portée par la cellule de gestion RM n'est pas modifiée.

Arrivée à l'extrémité du réseau, la cellule de gestion RM est retournée vers la source. Elle porte alors la plus petite valeur de débit qui a été allouée à la communication par le réseau et qui est donc autorisée par celui-ci le long du trajet de la communication. La source adapte alors son débit d'émission de cellules usager à cette nouvelle valeur.

On notera que l'on nomme ici cellules usager, les cellules qui portent les données, par exemple des données d'image et de son, émises par la source à destination de son interlocuteur.

Le procédé selon l'invention concerne donc l'allocation d'un débit à une communication. Cette allocation est dynamique en ce sens qu'elle fait l'objet d'une renégociation de débit qui est effectuée avec la périodicité T d'émission des cellules gestion de ressources RM. Ainsi, pour chaque communication qui converge sur lui, chaque noeud du réseau voit passer, dans une période T, une seule et unique requête de renégociation de débit et y répond, au moyen du procédé de l'invention, en y allouant un débit pour ses cellules usager.

Le procédé de l'invention est donc mis en oeuvre selon des cycles successifs de période T. On va décrire les différentes étapes du procédé telles qu'elles apparaissent dans un cycle.

Si on appelle C la bande maxima que peut supporter le lien de sortie du noeud considéré, une répartition la plus équitable possible entre les N sources dont les connexions convergent sur ce noeud alloue à chaque source la valeur de débit $C / N$. En conséquence, lors d'un cycle initial, cette valeur $R1 = C / N$ est placée dans chacun des registres Reg respectivement liés aux communications actives.

Lors de chaque cycle, lorsque le noeud reçoit la cellule de gestion de ressources RM émise d'une source dont la connexion converge sur lui, deux cas peuvent se présenter.

Dans un premier cas, la valeur $Rq$ qui est requise par la source et qui est portée par la cellule RM est inférieure à la valeur $R1$. Alors, un registre $R_\Delta$ comptabilisant la quantité $\Delta$ de bande qui n'a pas été allouée pendant le cycle courant est incrémenté de la différence $R1 - Rq$. Par ailleurs, la communication est marquée comme ne pouvant pas augmenter son débit au-dessus de la valeur $Rq$.

Dans l'autre cas, la valeur requise $Rq$ est supérieure à la valeur $R1$. La demande de la source est dite écrêtée à la valeur $R1$ et est marquée en conséquence. On incrémente par ailleurs un compteur $m$ qui compte le nombre de demandes écrêtées.

A la fin du cycle, lorsque toutes les sources ont transmis leur cellule de gestion de ressources RM, c'est-à-dire après un temps T correspondant à la période d'émission des cellules RM par les sources, la situation est la suivante.

Les communications dont les demandes de débit $Rq$ sont inférieures à la valeur $R1$ sont marquées comme ne pouvant augmenter leur débit au-delà de cette valeur $Rq$. Pour les autres, la valeur du débit qui leur est allouée est pour l'instant égale à la valeur $R1$. La totalité de la bande non encore allouée durant le cycle est stockée dans le registre $\Delta$ et le nombre de communications écrêtées est stocké dans le compteur $m$.

On connaît ainsi le nombre de connexions qui souhaitent augmenter leur débit et la bande qui reste disponible pour cette augmentation. Selon l'invention, on autorise les connexions qui ont été écrêtées à augmenter, au cycle suivant, leur débit d'une valeur correspondant à la bande du lien de sortie du noeud qui n'a pas été encore allouée divisée par le nombre $m$ de communications écrêtées.

Ainsi, au cycle suivant, on remet en oeuvre le procédé de l'invention avec une nouvelle valeur de $R1$ et en n'autorisant que les connexions précédemment écrêtées à augmenter leur débit.

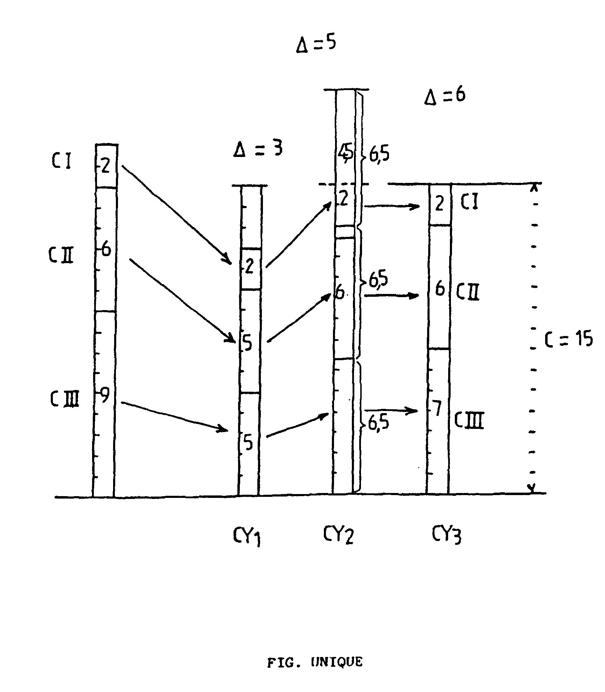

On va maintenant expliciter le procédé selon l'invention en prenant d'abord un exemple arbitraire illustratif dans lequel trois communications C1, C2 et C3 sont mises en jeu (voir la Fig. 1). La première C1 a une demande de débit correspondant à deux unités, la seconde C2 à six unités et la troisième C3 à neuf unités. La capacité maximale C du lien de sortie du noeud est de quinze unités (C = 15).

Lors du cycle initial $CY_1$, on va affecter à chaque communication un débit équitablement partagé $R1$ dont la valeur est donc $R1 = C / N$ où N est le nombre de communications actives convergeant sur le noeud considéré. Ici N = 3. On a donc $R1 = 5$. Le débit total affecté est $N \cdot R1$ soit quinze unités.

Selon la terminologie adoptée ici, l'affectation d'un débit à une communication n'est pas l'allocation. Pour une connexion qui a été précédemment écrêtée, la valeur du débit affecté est la valeur maxima de débit que le noeud peut allouer à cette connexion. Par contre, pour une connexion qui n'a pas été précédemment écrêtée, la valeur du débit affecté est sans rapport avec la valeur de débit alloué. La différence entre la valeur du débit affecté et la valeur du débit alloué est comptabilisée en tant que valeur de bande non allouée.

Ainsi, à la communication C1, on alloue deux unités et il reste donc trois unités qui n'ont pas été allouées et qui sont alors comptabilisées dans le registre $R_\Delta$ ($\Delta = 3$). A chacune des communications C2 et C3 qui ont été écrêtées à la valeur de cinq unités, on n'alloue que ces cinq unités. Pour ces communications C2 et C3 seulement, la valeur de débit alloué est égale à la valeur de débit affecté.

A la fin de ce cycle, on a donc $\Delta = 3$ et $m = 2$ (nombre de communications écrêtées = 2).

Au cycle suivant $CY_2$, on va distribuer équitablement les trois unités qui n'ont pas été allouées au cycle précédent $CY_1$ à chacune des deux communications écrêtées C2 et C3, soit $\frac{\Delta}{m} = \frac{3}{2} = 1,5$ unité par communication. Pour ce faire, on va affecter à chaque communication active sur le noeud considéré un débit équitablement partagé $R1$ de (5 + 1,5) unités soit 6,5 unités. Le débit total affecté est alors de $N \cdot R1 = 6,5 \times 3 = 19,5$ unités.

A la communication C1, on alloue deux unités et il reste, par rapport aux 6,5 unités affectées, 4,5 unités non allouées. A la communication C2, on alloue six unités correspondant à sa requête, et il reste donc 0,5 unité non allouée qui ajoutée aux 4,5 unités déjà non-allouées de la communication C1 donnent cinq unités non allouées. A la communication C3, on alloue 6,5 unités. Cette communication C3 est la seule qui a été écrêtée durant ce cycle. A la fin du cycle, on a donc $\Delta = 5$ et $m = 1$.

Pour le calcul de la bande à partager au cycle suivant, on doit retrancher, des cinq unités non allouées, le débit affecté en excédent par rapport à la capacité maxima C du lien de sortie du noeud, c'est-à-dire $(N \cdot R1 - C) = (19,5 - 15) = 4,5$ unités. La bande à partager au cycle suivant sera donc égale à : 5 - 4,5 = 0,5 unité qui va permettre de calculer la nouvelle valeur de $R1$ égale maintenant à 6,5 + 0,5 = 7 unités.

Au cycle $CY_3$, on va affecter à chaque communication active 7 unités correspondant à la nouvelle valeur de $R1$. Le débit total affecté est donc de 3 x 7 unités, soit 21 unités. On peut constater qu'à la fin du cycle $CY_3$, $\Delta$ sera égal à 6. La bande à partager au cycle suivant sera alors de $\Delta - (N \cdot R1 - C) = 0$.

Le processus se poursuit ainsi de cycle en cycle.

On va maintenant formaliser le procédé selon l'invention.

La bande disponible pour l'ensemble des communications est la bande disponible sur le lien de sortie du noeud, soit C.

Le débit total qui est équitablement affecté, au débit de chaque cycle, est noté $Da$ et sa valeur est égale à $N \cdot R1$, d'où :

$$Da = N \cdot R1$$

Or, ce débit total affecté $Da$ peut être supérieur à la capacité maxima C du lien de sortie du noeud. Il en résulte qu'un débit a été affecté de manière excédentaire par rapport à cette capacité. Ce débit excédentaire $De$ a donc pour valeur :

$$De = Da - C = N \cdot R1 - C.$$

On peut donc écrire la relation suivante :

$$C = Da - De = Da - (N \cdot R1 - C) = Da + (C - N \cdot R1)$$

A la fin de chaque cycle, le débit total affecté $Da$ a été, dans une première partie, alloué et, dans une seconde partie, non-alloué. Dans la partie allouée, se trouvent, d'une part, le débit effectivement alloué aux connexions qui sont écrêtées, soit m.R1, où $m$ représente le nombre de connexions écrêtées et $R1$ le débit affecté à chaque communication et, d'autre part, le débit total alloué aux connexions non écrêtées, soit

$$\sum_{non-écrêtées} Débit.$$

Quant à la seconde partie non-allouée, elle a été comptabilisée dans le registre $R_\Delta$. On peut donc écrire :

$$Da = m \cdot R1 + \sum_{non-écrêtées} Débit + \Delta$$

soit, en remplaçant dans l'expression précédente :

$$C = m \cdot R1 + (C - N \cdot R1) + \sum_{non-écrêtées} Débit + \Delta$$

ce qui peut se réécrire de la manière suivante :

$$C = m \cdot \left( R1 + \frac{(C - N \cdot R1) + \Delta}{m} \right) + \sum_{non-écrêtées} Débit$$

On voit, par cette relation, que si l'on attribue, au prochain cycle et aux m connexions qui ont été écrêtées précédemment, la valeur qui est comprise entre parenthèses, la bande sera équitablement partagée et sera complètement utilisée.

Selon l'invention, on va procéder de la manière suivante. Au prochain cycle, on va recommencer la mise en oeuvre du procédé de l'invention en autorisant les seules connexions qui ont été écrêtées à augmenter de nouveau leur débit. Pour ce faire, on modifie la valeur de $R1$ qui est maintenant égale à :

$$R1 = R1 + \frac{(C - N \cdot R1) + \Delta}{m}$$

Ainsi, au début de chaque cycle, on se trouve avec un certain nombre de connexions qui ne sont pas autorisées à augmenter leur débit alors que les autres le sont et, ce, jusqu'à une valeur qui correspond à la valeur qui est stockée dans le registre $R1$. Puis les connexions sont examinées les unes après les autres par le procédé explicité ci-dessus, pour qu'à la fin du cycle, on puisse déterminer le débit disponible non encore alloué $\Delta$ et le nombre **m** de connexions écrêtées. De là, on recalcule une nouvelle valeur de $R1$ qui sera utilisée pour l'examen du cycle suivant. Ce processus se poursuit donc de manière continue de cycle en cycle.

Selon l'invention, si une connexion qui n'a pas été écrêtée lors du cycle précédent souhaite, au cycle courant, augmenter son débit, on interrompt le cycle courant. Puis on modifie la valeur qui est stockée dans le registre $R1$ et on lance un nouveau cycle à partir de cette connexion. La nouvelle valeur de $R1$ est égale au maximum entre la valeur de débit précédemment allouée à la connexion concernée et la valeur de débit équitablement répartie

$$\frac{C}{N},$$

$C$ étant le débit disponible sur le lien de sortie du noeud considéré et $N$ étant le nombre de connexions actives au moment considéré.

Selon un premier mode de réalisation de la présente invention, et afin de s'assurer que, lors d'une période, une renégociation de débit a bien eu lieu pour chaque connexion active convergeant sur le noeud considéré, on prévoit un compteur prévu pour compter les requêtes émanant de chacune des sources, le procédé étant alors prévu pour n'examiner que les connexions qui ont un même numéro d'ordre.

Selon un autre mode de réalisation de la présente invention, on prévoit que la période de modification du registre $R1$ est plus importante que la période de renégociation mise en oeuvre par les équipements du réseau prévus à cet effet.

Avantageusement, on augmente cette période de la valeur maximale des temps respectivement mis par les cellules de gestion de ressources RM des connexions actives pour effectuer le trajet complet de la source à l'autre extrémité du réseau et revenir à la source. Ainsi, on est sûr que l'ensemble des sources a eu le temps de se mettre en conformité avec les débits autorisés par les différents noeuds du réseau, mise en conformité qui ne peut avoir lieu qu'après que la cellule de gestion de ressources RM qui est porteuse de l'information correspondant au débit alloué à la source ait eu le temps de retourner jusqu'à la source. Cette manière de faire permet au procédé une certaine robustesse par rapport à la rupture de certaines liaisons.

Au cas où une connexion ferait deux requêtes dans une même période, il ne serait pas tenu compte de la seconde pour qu'elle ne perturbe pas la répartition de la bande passante entre les sources. Chaque connexion est pour ce faire marquée une fois avoir effectué une requête et cette marque est effacée au début de chaque cycle. Ainsi, dans un cycle donné, une demande n'est donc plus acceptée si elle émane d'une connexion qui a déjà été marquée.

Selon un autre mode de réalisation de l'invention, pour éviter qu'une même connexion soit analysée deux fois durant un même cycle, on affecte, à chaque cycle, un numéro d'ordre qui est incrémenté d'une unité à chaque nouveau cycle. Ce numéro d'ordre est mémorisé pour chaque connexion après son analyse dans le cycle. Ainsi, supposons que l'on soit dans le cycle Cy. Dans ce cycle, avant analyse, à une connexion donné, est mémorisé le numéro Cy - 1. Après analyse, est mémorisé le numéro Cy.

Avant d'allouer un débit à une source, on vérifie que le numéro d'ordre mémorisé pour la connexion considérée est inférieur d'une unité à celui du cycle courant. Si tel est le cas, l'allocation est mise en oeuvre. Sinon, elle n'est pas mise en oeuvre, car cela signifie que ladite connexion a déjà été analysée dans le cycle courant.

Lorsqu'on interrompt un cycle Cy, suite à une demande de débit d'une connexion non-écrêtée supérieure à ce qu'elle a jusqu'alors demandé, et qu'on recommence un nouveau cycle, on va affecter à ce cycle un numéro égal au numéro du cycle interrompu Cy plus deux unités. Chaque vérification aboutit ainsi à une nouvelle allocation.

Dans le procédé qui vient d'être décrit, le débit demandé par la source vidéo correspondant à son débit maximum demandé est fixe dans le temps au moins à l'échelle de quelques cycles. L'utilisateur peut, s'il le désire, modifier ce paramètre mais, en pratique, il le fera rarement. Si toutefois pour des raisons de taille de réseau ou autres, les demandes des sources devaient être très souvent modifiées, on a pu montrer que le procédé de l'invention tend alors vers une allocation des débits à la valeur $C/N$ si bien que l'on perd l'avantage de pouvoir utiliser la bande disponible pour la partager entre les sources dont les demandes sont les plus élevées.

Dans le procédé qui vient d'être décrit, chaque source fait une demande de débit maximum. Or, le procédé s'applique également au cas où l'on voudrait tenir compte d'une équité qui serait proportionnelle aux débits minimum garantis des sources. Pour ce faire, on procéderait de la manière suivante.

On divise la valeur C du débit disponible sur le lien de sortie du noeud considéré par la somme des débits minima garantis $Dmg_i$ (i = 1 à N). On obtient alors un facteur qui permet la pondération de chaque débit équitablement affecté, noté ici $R_i$. En effet, on a alors :

$$R_i = Dmg_i \cdot \left/ \sum_{i=(1,\ldots N)} Dmg_i \right. = DMG_i \cdot C$$

où $DMG_i$ est le facteur de pondération appliqué à la source $C_i$.

Chaque connexion Ci est donc écrêtée à la valeur de débit $R_i$. Si l'on considère un registre $R$ dans lequel est stockée la valeur du débit total affecté à toutes les connexions, la valeur de débit $R_i$ affectée à une connexion sera égale à :

$$R_i = DMG_i \cdot R$$

A la fin de chaque cycle, la valeur recalculée de ce registre sera donnée par la relation suivante analogue à celle mentionnée ci-dessus :

$$R = R + \frac{C - R \cdot \sum_{i=1\ldots,N} DMG_i + \Delta}{\sum_{\text{écrêtées}} DMG_i} = R + \frac{C - R + \Delta}{\sum_{\text{écrêtées}} DMG_i}$$

où

$$\sum_{i=1\ldots,N} DMG_i = 1$$

représente la somme des facteurs de pondération, $\Delta$ représente de débit non-alloué et

$$\sum_{\text{écrêtées}} DMG_i$$

représente la somme des facteurs de pondération des seules connexions qui ont été écrêtées.

**Revendications**

**1.** Procédé d'allocation dynamique de débits prévu pour être mis en oeuvre aux noeuds d'un réseau, ledit procédé consistant à allouer à chaque connexion convergeant sur un noeud dudit réseau et suite à une requête de débit établie périodiquement par la source correspondant à cette connexion, un débit de cellules qui est soit égal à ladite requête, soit égal au débit laissé libre par les sources auxquelles est alloué un débit correspondant à leur requête et partagé entre toutes les sources restantes, **caractérisé en ce que**, pour allouer ledit débit, il consiste, lors de cycles successifs, à :

a) au début de chaque cycle de réception des requêtes émanant desdites sources correspondantes auxdites connexions, considérer un débit ($R1$, $R_i$), dit débit affecté, et l'affecter à chacune desdites connexions, et
b) pendant le cycle, à allouer

b1) à chaque connexion dont le débit requis ($Rq$) est supérieur au débit affecté ($R1$, $R_i$), le débit affecté ($R1$, $R_i$), ladite connexion étant alors comptabilisée (m) et marquée en tant que connexion écrêtée,
b2) à chaque connexion dont le débit requis ($Rq$) est inférieur au débit affecté ($R1$, $R_i$), soit le débit déjà alloué au cycle précédent si à ce cycle précédent ladite connexion n'avait pas été marquée en tant que connexion écrêtée, soit le débit requis ($Rq$) si au cycle précédent ladite connexion avait été marquée en tant que connexion écrêtée, la différence entre la valeur du débit affecté et la valeur du débit alloué étant alors comptabilisée en tant que valeur de débit non-alloué ($\Delta$),

c) et, à la fin dudit cycle, calculer une nouvelle valeur de débit affecté ($R1$, $R_i$) pour le cycle suivant au moyen de la relation suivante :

$$R1 = R1 + \frac{(C - N \cdot R1) + \Delta}{m}$$

où C est la valeur en débit de la bande maxima offerte par le lien de sortie dudit noeud, N est le nombre de connexions actives sur ledit noeud, $\Delta$ est le débit non-alloué et $m$ est le nombre de connexions écrêtées.

**2.** Procédé selon la revendication 1, **caractérisé en ce qu'**il consiste à affecter à chacune desdites sources, lors d'un cycle initial, un débit correspondant au partage équitable entre toutes les sources de la bande maxima offerte par le lien de sortie dudit noeud :

$$R1 = C/N$$

où C est la valeur en débit de la bande maxima offerte par le lien de sortie dudit noeud, et N est le nombre de connexions actives sur ledit noeud.

**3.** Procédé selon une des revendications précédentes, **caractérisé en ce qu'**il est prévu pour que la période de chaque cycle soit supérieure à la période de renégociation mise en oeuvre par les équipements dudit réseau.

**4.** Procédé selon une des revendications précédentes, **caractérisé en ce qu'**il est prévu pour que la période de chaque cycle soit supérieure à la période de renégociation mise en oeuvre par les équipements dudit réseau augmentée de la durée maxima des temps respectivement mis par des cellules des gestion de ressources RM desdites connexions pour effectuer le trajet complet de la source considérée à l'autre extrémité du réseau et revenir à ladite source.

**5.** Procédé selon une des revendications précédentes, **caractérisé en ce qu'**il est prévu pour compter les requêtes émanant de chacune des sources, ledit procédé n'examinant que les requêtes qui ont un même numéro d'ordre.

**6.** Procédé selon une des revendications précédentes, **caractérisé en ce qu'**il est prévu pour marquer une connexion après réception de la requête de la source correspondante, ladite marque étant annulée au début de chaque cycle, et ledit procédé n'examinant que les requêtes des sources dont les connexions sont déjà marquées.

**7.** Procédé selon une des revendications précédentes, **caractérisé en ce qu'**il consiste à pondérer, par un facteur de pondération, chacun des débits affectés auxdites connexions.

**8.** Procédé selon la revendication 7, **caractérisé en ce que** chaque facteur de pondération dépend du débit minimum garanti demandé par la source correspondante.

**9.** Procédé selon la revendication 8, **caractérisé en ce que** le facteur de pondération d'une source est égal au débit minimum garanti demandé par ladite source divisé par la somme totale des débits minimum garantis respectivement demandés par toutes les sources.

**10.** Procédé selon la revendication 9, **caractérisé en ce que** le débit affecté à une connexion est égal à la valeur de la somme des débits affectés de toutes les connexions que multiplie ledit facteur de pondération, la valeur de ladite somme de débit affecté étant alors donnée par la relation suivante :

$$R = R + \frac{C - R + \Delta}{\displaystyle\sum_{\text{écrêtées}} DMG_i}$$

où $\Delta$ représente de débit non-alloué et

$$\sum_{\text{écrêtées}} DMG_i$$

représente la somme des facteurs de pondération des seules connexions qui ont été écrêtées.

**11.** Procédé selon une des revendications précédentes, **caractérisé en ce qu'**à la réception de la requête d'une source dont la connexion n'avait pas été marquée au cycle précédent en tant que connexion écrêtée, et lorsque le débit maintenant requis est supérieur au débit qui avait été alloué au cycle précédent, il consiste à interrompre le cycle en cours et à recommencer un nouveau cycle à partir de cette requête, le débit affecté à chaque source étant le débit le plus élevé entre le débit courant de la connexion concernée et la valeur de débit équitablement répartie entre toutes les sources.

**12.** Procédé selon la revendication 11, **caractérisé en ce qu'**il consiste à conserver dans le contexte de chaque connexion un numéro caractérisant le cycle courant.

**Claims**

**1.** Method for dynamic rate allocation intended for implementation in network nodes, the said method consisting in allocating to each connection converging on a node of the said network, and following a rate request made periodically by the source corresponding to this connection, a cell rate which is either equal to the said request or equal to the rate left free by the sources to which a rate corresponding to their request is allocated and shared among all the remaining sources, **characterised in that**, in order to allocate the said rate, it consists, during successive cycles, in:

a) at the beginning of each cycle of receipt of requests originating from the said sources corresponding to the said connections, considering a rate ($R1$, $R_i$), known as the assigned rate, and assigning it to each of the said connections, and
b) during the cycle, allocating

b1) to each connection with a required rate ($Rq$) greater than the assigned rate ($R1$, $R_i$), the assigned rate ($R1$, $R_i$), the said connection then being accounted (m) and marked as a clipped connection,
b2) to each connection with a required rate ($Rq$) lower than the assigned rate ($R1$, $R_i$), either the rate already allocated to the preceding cycle if, in this preceding cycle, the said connection had not been marked as a clipped connection, or the required rate ($Rq$) if, in the preceding cycle, the said connection had been marked as a clipped connection, the difference between the value of the assigned rate and the value of the rate allocated then being accounted as a non-allocated rate value ($\Delta$),

c) and, at the end of the said cycle, calculating a new value for the assigned rate ($R1$, $R_i$) for the following cycle using the following relation:

$$R1 = R1 + \frac{(C - N \cdot R1) + \Delta}{m}$$

where $C$ is the rate value of the maximum band offered by the outgoing link at the said node, $N$ is the number of active connections on the said node, $\Delta$ is the non-allocated rate and $m$ is the number of clipped connections.

2. Method according to Claim 1, **characterised in that** it consists in assigning to each of the said sources, during an initial cycle, a rate corresponding to equitable sharing among all the sources of the maximum band offered by the outgoing link on the said node:

$$R1 = C/N$$

where $C$ is the rate value of the maximum band offered by the outgoing link at the said node and $N$ is the number of active connections on the said node.

3. Method according to one of the preceding claims, **characterised in that** it is intended for the period of each cycle to be greater than the period of renegotiation implemented by the equipment on the said network.

4. Method according to one of the preceding claims, **characterised in that** it is intended for the period of each cycle to be greater than the period of renegotiation implemented by the equipment on the said network increased by the maximum duration of the times respectively set by the RM resource management cells on the said connections in order to complete the entire path from the source in question to the other end of the network and return to the said source.

5. Method according to one of the preceding claims, **characterised in that** it is intended to count the requests originating from each of the sources, the said method only examining requests with the same serial number.

6. Method according to one of the preceding claims, **characterised in that** it is intended to mark a connection after receipt of the request from the corresponding source, the said mark being cancelled at the start of each cycle and the said method only examining requests from sources whose connections are already marked.

7. Method according to one of the preceding claims, **characterised in that** it consists in weighting, using a weighting factor, each of the rates assigned to the said connections.

8. Method according to Claim 7, **characterised in that** each weighting factor depends on the guaranteed minimum rate requested by the corresponding source.

9. Method according to Claim 8, **characterised in that** the weighting factor of a source is equal to the guaranteed minimum rate requested by the said source divided by the total sum of guaranteed minimum rates respectively requested by all the sources.

10. Method according to Claim 9, **characterised in that** the rate assigned to a connection is equal to the value of sum of the assigned rates of all the connections multiplied by the said weighting factor, the value of the said assigned rate sum then being given by the following relation:

$$R = R + \frac{C - R + \Delta}{\sum_{clipped} DMG_i}$$

where $\Delta$ represents a non-allocated rate and

$$\sum_{clipped} DMG_i$$

represents the sum of the weighting factors of the only connections which have been clipped.

11. Method according to one of the preceding claims, **characterised in that**, upon receipt of the request from a source whose connection had not been marked in the preceding cycle as a clipped connection and when the rate now required is greater than the rate which had been allocated to the preceding cycle, it consists in interrupting the cycle in progress and re-starting a new cycle from this request, the rate assigned to each source being the highest rate between the current rate for the connection concerned and the rate value equitably shared among all the sources.

12. Method according Claim 11, **characterised in that** it consists in retaining, in the context of each connection, a number **characterising** the current cycle.

**Patentansprüche**

1. Verfahren zum dynamischen Zuordnen von Durchsätzen, das dazu vorgesehen ist, an den Knoten eines Netzes angewandt zu werden, wobei das Verfahren darin besteht, jedem Anschluss, der auf einem Knoten des Netzes konvergiert, und nach einer Durchsatzanfrage, die periodisch von der diesem Anschluss entsprechenden Quelle erstellt wird, einen Durchsatz von Zellen zuzuordnen, der entweder gleich der Anfrage oder gleich dem Durchsatz ist, der von den Quellen, welchen ein ihrer Anfrage entsprechender Durchsatz zugeordnet ist, frei gelassen und auf alle restlichen Quellen verteilt wird, **dadurch gekennzeichnet, dass** das Verfahren zum Zuordnen des Durchsatzes darin besteht, bei aufeinander folgenden Zyklen:

   a) zu Beginn jedes Empfangszyklus der Anfragen seitens der entsprechenden Quellen an den Anschlüssen einen Durchsatz ($R1$, $R_i$) in Betracht zu ziehen, der zugewiesener Durchsatz genannt wird, und ihn jedem der Anschlüsse zuzuweisen, und

   b) während des Zyklus Folgendes zuzuordnen

      b1) jedem Anschluss, dessen geforderter Durchsatz ($Rq$) größer ist als der zugewiesene Durchsatz ($R1$, $R_i$), den zugewiesenen Durchsatz ($R1$, $R_i$), wobei der Anschluss erfasst (m) und als begrenzter Anschluss **gekennzeichnet** wird,

      b2) jedem Anschluss, dessen geforderter Durchsatz ($Rq$) geringer ist als der zugewiesene Durchsatz ($R1$, $R_i$), entweder den bereits im vorhergehenden Zyklus zugeordneten Durchsatz, wenn der Anschluss bei diesem vorhergehendem Zyklus nicht als begrenzter Anschluss **gekennzeichnet** wurde, oder den geforderten Durchsatz ($Rq$), wenn der Anschluss beim vorhergehenden Zyklus als begrenzter Anschluss **gekennzeichnet** wurde, wobei der Unterschied zwischen dem Wert des zugewiesenen Durchsatzes und dem Wert des zugeordneten Durchsatzes als Wert des nicht zugeordneten Durchsatzes ($\Delta$) erfasst wird,

   c) und, am Ende des Zyklus, einen neuen Wert des zugewiesenen Durchsatzes ($R1$, $R_i$) für den folgenden Zyklus mittels der folgenden Relation zu berechnen:

$$R1 = R1 + \frac{(C - N \cdot R1) + \Delta}{m}$$

wobei C der Wert an Durchsatz des durch die Ausgangsverbindung des Knotens gebotenen Maximalbands, N die Anzahl der auf dem Knoten aktiven Anschlüsse, $\Delta$ der nicht zugeordnete Durchsatz und m die Anzahl der begrenzten Anschlüsse ist.

**2.** Verfahren nach Anspruch 1, **dadurch gekennzeichnet, dass** es darin besteht, jeder der Quellen bei einem anfänglichen Zyklus einen Durchsatz zuzuweisen, der dem angemessenen Aufteilen des von der Ausgangsverbindung des Knotens gebotenen Maximalbands auf alle Quellen entspricht:

$$R1 = C / N$$

wobei C der Wert an Durchsatz des von der Ausgangsverbindung des Knotens gebotenen Maximalbands und N die Anzahl der auf dem Knoten aktiven Anschlüsse ist.

**3.** Verfahren nach einem der vorhergehenden Ansprüche, **dadurch gekennzeichnet, dass** es dazu vorgesehen ist, dass die Periode jedes Zyklus größer ist als die Neuverhandlungsperiode, die von den Ausstattungen des Netzes angewandt wird.

**4.** Verfahren nach einem der vorhergehenden Ansprüche, **dadurch gekennzeichnet, dass** es dazu vorgesehen ist, dass die Periode jedes Zyklus größer ist als die Neuverhandlungsperiode, die von den Ausstattungen des Netzes angewandt wird, erhöht um die maximale Dauer der Zeiten, die die Ressourcenverwaltungszellen RM der Anschlüsse jeweils brauchen, um den kompletten Weg von der betrachteten Quelle zum anderen Ende des Netzes und Zurückkehren zur Quelle zurückzulegen.

**5.** Verfahren nach einem der vorhergehenden Ansprüche, **dadurch gekennzeichnet, dass** es dazu vorgesehen ist, dass die Anfragen seitens jeder der Quellen gezählt werden, wobei das Verfahren nur Anfragen prüft, die eine gleiche Reihenfolgennummer haben.

**6.** Verfahren nach einem der vorhergehenden Ansprüche, **dadurch gekennzeichnet, dass** es dazu vorgesehen ist, einen Anschluss nach Empfang der Anfrage der entsprechenden Quelle zu kennzeichnen, wobei die Kennzeichnung zu Beginn jedes Zyklus annulliert wird und das Verfahren nur die Anfragen der Quellen prüft, deren Anschlüsse bereits **gekennzeichnet** sind.

**7.** Verfahren nach einem der vorhergehenden Ansprüche, **dadurch gekennzeichnet, dass** es darin besteht, durch einen Gewichtungsfaktor jeden der den Anschlüssen zugewiesenen Durchsätze zu gewichten.

**8.** Verfahren nach Anspruch 7, **dadurch gekennzeichnet, dass** jeder Gewichtungsfaktor vom garantierten Mindestdurchsatz abhängt, den die entsprechende Quelle verlangt hat.

**9.** Verfahren nach Anspruch 8, **dadurch gekennzeichnet, dass** der Gewichtungsfaktor einer Quelle gleich dem von der Quelle verlangten garantierten Mindestdurchsatz dividiert durch die Gesamtsumme der jeweils von allen Quellen verlangten garantierten Mindestdurchsätze ist.

**10.** Verfahren nach Anspruch 9, **dadurch gekennzeichnet, dass** der einem Anschluss zugewiesene Durchsatz gleich dem Wert der Summe der Durchsätze ist, die allen Anschlüssen zugewiesen sind, die der Gewichtungsfaktor multipliziert, wobei der Wert der Summe des zugewiesenen Durchsatzes von der folgenden Relation gegeben wird:

$$R = R + \frac{C - R + \Delta}{\sum_{\text{begrenzt}} DMG_i}$$

wobei $\Delta$ den nicht zugeteilten Durchsatz darstellt und

$$\sum_{begrenzt} DMG_i$$

die Summe der Gewichtungsfaktoren nur der Anschlüsse, die begrenzt wurden, darstellt.

11. Verfahren nach einem der vorhergehenden Ansprüche, **dadurch gekennzeichnet, dass** der Empfang der Anfrage einer Quelle, deren Anschluss im vorhergehenden zyklus nicht als begrenzter Anschluss **gekennzeichnet** wurde, und, wenn der jetzt geforderte Durchsatz größer ist als der im vorhergehenden Zyklus zugeordnete Durchsatz, das Verfahren darin besteht, den laufenden Zyklus zu unterbrechen und einen neuen Zyklus ausgehend von dieser Anfrage zu beginnen, wobei der jeder Quelle zugewiesene Durchsatz der Durchsatz ist, der von dem laufenden Durchsatz des betreffenden Anschlusses und dem Wert des angemessen auf alle Quellen verteilten Durchsatzes der höhere ist.

12. Verfahren nach Anspruch 11, **dadurch gekennzeichnet, dass** es darin besteht, im Kontext jedes Anschlusses eine Nummer zu wahren, die den laufenden Zyklus charakterisiert.

FIG. UNIQUE